# EUROPÄISCHE PATENTSCHRIFT

(11) **EP 2 623 157 B1**
(45) Veröffentlichungstag und Bekanntmachung des Hinweises auf die Patenterteilung: **17.08.2016**
(21) Anmeldenummer: 12000685.3
(22) Anmeldetag: 02.02.2012
(51) Int. Cl.: A62B 19/02, B01D 53/62, B01D 53/72, B01D 53/04, B01D 53/86

(54) **Adsorbentienkombination für Filter kombinierter Brand- und Industrie-Fluchtfiltergeräte und Atemschutzfilter enthaltend die Adsorbentienkombination und deren Verwendung**
Combination of adsorbent materials for filters of combined smoke and industrial escape filter devices and gas mask filters containing the combination of adsorbent materials and use of same
Combinaison d'adsorbants pour filtre d'évacuation incendie et industrie combiné et filtre de protection respiratoire comprenant la combinaison d'adsorbants et son utilisation

(43) Veröffentlichungstag der Anmeldung: 07.08.2013
(73) Patentinhaber: Dräger Safety AG & Co. KGaA, 23560 Lübeck (DE)
(72) Erfinder: Ammann, Klaus, 23611 Sereetz (DE); Wirschal, Julia, 23617 Stockelsdorf (DE)
(74) Vertreter: Müller Schupfner & Partner Patent- und Rechtsanwaltspartnerschaft mbB

(56) Entgegenhaltungen:
- EP-A1- 2 246 110
- EP-A2- 0 450 414
- WO-A1-2008/022461
- GB-A- 1 037 033
- US-A- 4 572 178
- US-A- 5 038 768

## Beschreibung

Die vorliegende Erfindung betrifft eine Adsorbentienkombination für Filter kombinierter Brand- und Industrie-Fluchtfiltergeräte enthaltend eine imprägnierte Aktivkohleschicht und eine Schicht eines Oxidgemisches, einen Atemschutzfilter enthaltend die Adsorbentienkombination und die Verwendung des Atemschutzflters.

### Einführung und Stand der Technik

Bei Fluchtfiltergeräten unterscheidet man zwischen Brandflucht- und Industriefluchtfiltergeräten. Während die Filter der Brandfluchtgeräte in erster Linie vor Kohlenmonoxid (CO) schützen, sind die Filter der Industriefluchtgeräte auf einen Schutz vor unterschiedlichen Industriegasen ausgelegt. Dies spiegelt sich auch in den entsprechenden Normen wider. So wird beispielsweise in der EN 403 (Atemschutzgerät für Selbstrettung - Filtergeräte mit Haube zur Selbstrettung bei Bränden) das erforderliche Gasaufnahmevermögen bezüglich CO beschrieben, während in der DIN 58647-7 (Atemschutzgeräte für Selbstrettung - Fluchtfiltergeräte) das Aufnahmevermögen für die als ABEK-Gase bekannten Substanzen beschrieben wird. Die Abkürzung ABEK steht für organische Gase und Dämpfe mit einem Siedepunkt > 65°C (A), anorganische Gase und Dämpfe ausgenommen Kohlenmonoxid (B), Schwefeldioxid und andere saure Gase und Dämpfe (E) und Ammoniak und organische Ammoniak-Derivate (K). Für die vorliegende Erfindung sind insbesondere das Adsorptionsvermögen für Cyclohexan, Chlor und/oder Ammoniak neben H₂S, HCN und/oder SO₂ von Bedeutung.

Eine weitere Verbreitung als die deutsche Norm DIN 58647-7 hat die europäische Norm EN14387 (Atemschutzgeräte - Gasfilter und Kombinationsfilter - Anforderungen, Prüfung und Kennzeichnung), in der ebenfalls Filter gegen ABEK-Gase, in diesem Falle für Arbeitsgeräte, beschrieben werden.

Aus unterschiedlichen Gesichtspunkten ist es vorteilhaft, einen Filtertyp bereitzustellen, der die Eigenschaften von Filtern für Brand- und Industriefluchtfiltergeräte in sich vereint Dazu müssen geeignete Adsorbentienkombinationen bereitgestellt werden.

Stand der Technik für die Füllung von CO-Fluchtfiltern ist Hopkalit (auch Hopcalit oder Hopcalite genannt). Hopkalit Ist eine Bezeichnung für Misch-Katalysatoren, die hauptsächlich aus Mangandioxid und Kupferoxid bestehen. Hopkalit katalysiert die Oxidation von giftigem Kohlenmonoxid (CO) zum Kohlendioxid (CO₂) durch (Luft-)Sauerstoff (O₂) bei Raumtemperatur.

Adsorbentienkombinatlonen von Hopkalit mit imprägnierten Aktivkohlen sind bereits bekannt. So beschreibt das Deutsche Patent DE 1067691 einen Atemfilter zum Schutz gegen Kohlenmonoxid, bei dem die Standzeit des Hopkalit gegenüber Kohlenmonoxid dadurch verlängert wird, dass eine mit hygroskopischen Substanzen imprägnierte Kohle dem Hopkalit vorgeschaltet wird. Die Imprägnierte Kohle dient also als Trockenmittel. Derartige Trockenmittel werden üblicherweise sehr hoch imprägniert, so dass die Adsorptionsfähigkeit gegenüber anderen Gasen nur noch schwach bis gar nicht mehr vorhanden ist.

In der Patentschrift RU 2206351 C1 wird eine Adsorbentienkombination von Hopkalit und imprägnierter Aktivkohle beschrieben. Die Aktivkohle ist hier mit einer relativ geringen Menge an CaCl₂ imprägniert, so dass neben der Trockenmittelfunktion auch noch Adsorptionseigenschaften der Kohle zum Tragen kommen. Nachteilig hierbei ist allerdings, dass die Aktivkohleimprägnierung für die Ammonlakadsorption nicht geeignet ist.

Die US 4572178 offenbart einen Behälter zur Aufnahme von Trockenmittel, Adsorbierten und einem Katalysator für die Filterung rauchbelasteter Atemluft zur Zufuhr in eine Atemmaske. Als Adsorbierten werden u.a. Aktivkohle, als Trockenmittel Zeolith oder Silicagel und als Katalysator Hopkalit empfohlen.

US 5038768 betrifft ein Atemschutzgerät umfassend einen Kanister zur Durchleitung vom Atemluft enthaltend Aktivkohle, aktiviertes Aluminiumoxid, ein Trockenmittel, Hopkalit und Natronkalk oder Lithiumhydroxid.

Aus der GB 1037033 A ist wiederum ein Atemschutzgerät in Form einer Atemmaske bekannt, die dem Träger erlaubt, sich in einer Kohlenmonoxid verunreinigten Atmosphäre für einen ausreichend langen Zeitraum aufzuhalten. Die verunreinigte Luft wird in einer ersten Kammer über Aktivkohle geleitet und in einer zweiten Kammer über den Katalysator Hopkalit, der Kohlenmonoxid in der Luft zu Kohlendioxid oxidiert.

Andererseits sind auch Atemschutzfilter bekannt, welche ein imprägniertes Sorptionsmittel aufweisen, dass gleichzeitig mehrere Luftschadstoffe bindet, Hopkallt aber nicht einsetzen. Solche Atemschutzfilter sind jedoch ohne besondere Ausrüstung nicht als Brandfluchtfliter geeignet, da sie nicht ausreichend gegen CO schützen. Die EP 2246110 A1 offenbart die Verwendung von Aktivkohle, welche mit einer Zink-Verbindung und einer Molybdän-Verbindung imprägniert Ist. Für eine gute SO₂- und NH₃-Abscheldung ist entgegen den Erfordernissen der vorliegenden Erfindung nach der EP 2246110 A1 ein hoher Wassergehalt der Aktivkohle erforderlich.

### Aufgabe der Erfindung

Aufgabe der vorliegenden Erfindung ist es, eine Adsorbentienkombination aus imprägnierter Aktivkohle und einem Oxidgemisch zur Verfügung zu stellen, die sowohl eine ABEK-Leistung nach DIN 58647-7 und EN 14387 aufweist als auch eine CO-Lelstung nach EN 403. Dabei soll das zugehörige Filter- bzw. Adsorbentien-Volumen möglichst klein sein.

### Kurzdarstellung der Erfindung

Diese Aufgabe wird durch den Gegenstand der unabhängigen Ansprüche gelöst. Bevorzugte Ausführungsformen sind Gegenstand der Unteransprüche oder nachfolgend beschrieben.

Es wurde gefunden, dass die oben beschriebene Aufgabe durch imprägnierte Aktivkohle und ein Oxidgemisch enthaltend Mangandioxid und Kupfer(II)oxid gelöst wird. Als Imprägnierung, d.h. Auftrag, für die Kohle können Phosphorsäure, ein Zinksalz einer anorganischen Säure, insbesondere Zinkchlorid (ZnCl₂) und/oder Zinksulfat (ZnSO₄), ein Kupfersalz einer anorganischen Säure, insbesondere Kupfer(II)chlorid (CuCl₂) und/oder Kupfer(II)sulfat (CuSO₄) eingesetzt werden, wobei die anorganische Säure jeweils eine Halogenwasserstoffsäure, Schwefelsäure oder Kohlensäure ist.

### Detaillierte Darstellung der Erfindung

Als Aktivkohlen werden vorzugsweise Formkohlen und Granulatkohlen eingesetzt Der Wassergehalt der Aktivkohle beträgt kleiner 4 Gew.-%, vorzugsweise kleiner 2 Gew.-%.

Eine Aktivkohle, die mit Phosphorsäure imprägniert ist, hält einerseits NH₃ zurück und fungiert außerdem als Trockenmittel. Allerdings wird gefunden, dass mit steigendem Imprägniergrad die Cyclohexanleistung vermindert wird, so dass hier eine bestimmte Menge der Imprägnierung nicht überschritten werden darf. Gleiches gilt für erfindungsgemäß eingesetzte Zink- und Kupfersalze als Imprägniermittel für die Aktivkohle.

Außerdem wurde gefunden, dass Imprägnierungen der Aktivkohle mit Gemischen von obigen Metallsalzen vorteilhaft eingesetzt werden können, nachdem die Aktivkohle getrocknet wurde. Solche und ähnliche Gemische können auch - ohne Hopkalit - in ABE- bzw. ABEK-Filtem für Arbeitsgeräte zum Einsatz kommen. Um die Cyclohexan-Leistung im vorliegenden Fall der Filter für kombinierte Brand- und Industriefluditfiltergeräte zu erreichen, muss hier allerdings der sonst übliche Imprägniergrad reduziert werden. Die Aktivkohle soll eine Imprägnierung beinhalten, die sowohl zur NH₃-Adsorption befähigt als auch als Trockenmittel fungieren kann.

Das Oxidgemisch enthält größer 40 Gew.-% Mangan(IV)dioxid (MnO₂) und größer 20 Gew.-% Kupfer(II)oxid (CuO), vorzugsweise 65 +/- 10 Gew.-% MnO₂ und 35 +/-10 Gew.-% CuO, besonders bevorzugt 65 +/- 5 Gew.-% MnO₂ und 35 +/- 5 Gew.-% CuO. Der Wassergehalt des Oxidgemischs liegt vorzugsweise bei kleiner 3 Gew.-%, besonders bevorzugt bei < 1,5 Gew.-%.

Neben Mangandioxid und Kupfer(II)oxid können weitere Oxide in dem Oxidgemisch enthalten sein, wie z.B. Cobalt(II)oxid (CoO, z.B. 5 bis 20 Gew-%) und Silberoxid (Ag₂O, z.B. 1 bis 10 Gew.-%).

Das Oxidgemisch kann durch physikalisches Mischen der (feinverteilten) Metalloxide, gemeinsame Fällung der Metalloxide bzw. Metallhydroxide, z.B. aus Metallsalzlösungen, ggf. kombiniert mit Redox-Reaktionen, oder thermische Zersetzung von Mischungen der Metalinitrate und Metallcarbonate hergestellt werden. Das Oxidgemisch liegt vorzugsweise in Granulatform und in Substanz vor, ggf. aber auch geträgert.

Die Menge an Oxidgemisch, die die Gasrückhalte-Bedingungen der EN 403 erfüllt, ist in der Lage, die Anforderungen aus der DIN 58647-7 bzw. der EN 14387 Klasse 1 für H₂S, HCN und SO₂ zu erfüllen. Die Leistung bezüglich der drei anderen Gase Cyclohexan, Chlor und NH₃ muss in den erfindungsgemäßen Zusammensetzungen in erster Linie durch die imprägnierte Aktivkohle bereitgestellt werden. Da die Chlor-Leistung einer imprägnierten Aktivkohle weitgehend unabhängig von der Imprägnierung ist, sind die Imprägniersubstanzen in erster Linie so zu wählen, dass einerseits die NH₃-Leistung erhöht wird, ohne andererseits die Cyclohexan-Leistung zu stark negativ zu beeinflussen.

Es ist für die vorliegende Erfindung von Vorteil, wenn die imprägnierte Kohle auch ein Aufnahmevermögen gegenüber Luftfeuchtigkeit aufweist. Platziert man eine solche Aktivkohle in Strömungsrichtung vor dem feuchtigkeitsempfindlichen Oxidgemisch, so wird die Haltezeit des Oxidgemischs gegenüber CO erhöht bzw. kann die andernfalls erforderliche Menge an Oxidgemisch gesenkt werden.

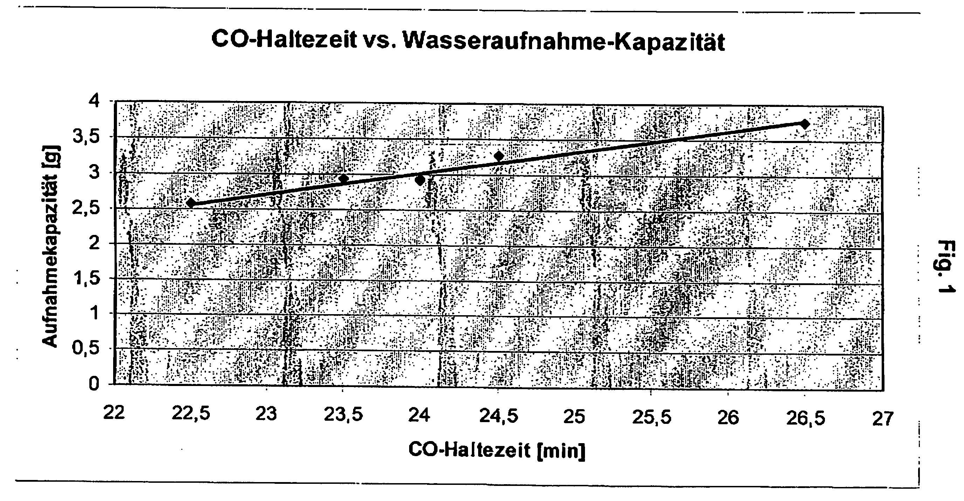

Fig. 1 zeigt die Abhängigkeit der CO-Haltezeit von der Wasseraufnahme-Kapazität von vorgeschalteter imprägnierter Aktivkohle bei 12 mm Betthöhe, 8 cm/sec Anströmgeschwindigkeit und 20 Minuten Testzeit (wobei die Bedingungen der EN403 entsprachen) und der CO-Haltezeit (entsprechend EN403) von Filtern, die mit einer Adsorbentienkombination aus imprägnierter Aktivkohle und Oxidgemisch aus MnO₂ (65 Gew.-%) und CuO (34 Gew.-%) ausgestattet sind (110 mL Kohle, 160 mL Oxidgemisch). Es zeigte sich ein annähernd linearer Zusammenhang zwischen der CO-Haltezeit und der Wasseraufnahme-Kapazität.

Die Herstellung der imprägnierten Aktivkohlen gemäß Tabelle 1 erfolgte durch Herstellung einer Imprägnierlösung, Vorlegen eines abgemessenen Aktivkohlevolumens und Imprägnierung der Aktivkohle mit der Imprägnierlösung gefolgt von einer Trocknung der imprägnierten Aktivkohle. Dabei erfolgte die Herstellung der jeweiligen Imprägnierlösung durch Einwiegen der entsprechenden Chemikalienmenge und anschließendes Lösen derselben in wässriger Lösung. Die Angaben in Gew.-% in Tabelle 1 beziehen sich auf die fertig imprägnierte getrocknete Aktivkohle. Sie geben die imprägnierung in Gew.-% an, d.h. den Auftrag des Salzes bzw. der Phosphorsäure im getrockneten Zustand. Der Wassergehalt der untersuchten Aktivkohle wurde auf < 2 Gew.-% eingestellt. In Tabelle 1 ist für die Haltezeiten jeweils ein Zielwert in der ersten Werte-Zeile aufgeführt, der auf der jeweils anspruchsvolleren Anforderung aus den beiden Normen EN14387 und DIN 58647-7 basiert, jedoch zusätzlich einen Sicherheitsabstand von 15% bzw. 5 Minuten (je nachdem, welcher Wert höher ist) aufweist.

Bei Einsatz von Kohle ohne Imprägnierung (Tabelle 1, Beispiel 1) oder von Kohle mit zu viel Imprägniersalzen (Tabelle 1, Beispiel 5), jeweils Vergleichsbeispiel, werden einzelne der Zielwerte nicht erreicht. Im letzteren Fall führt eine Reduzierung des Imprägnierungsgrades zum Ziel (Tabelle 1, Beispiel 6).

**Tabelle 1:**

| Haltezeiten von Adsorbentienkombinationen aus imprägnierter Aktivkohle (110 mL) und Oxidgemisch (160 mL) gegen ausgesuchte Schadstoffe und Wasseraufnahmekapazität der Aktivkohle. | | | | | | |
|---|---|---|---|---|---|---|
| | Imprägnierung / Aktivkohle / Zielwert | C₆H₁₂ (A1)-Haltezeit [min] entsprechend EN14387 | NH₃(K1)-Haltezeit [min] entsprechend EN14387 | Cl₂-Kaltezeit [min] entsprechend DIN 58647-7 | CO-Haltexeit [min] entsprechend EN403 | Wasseraufnahmekapazität [g] entsprechend Fig. 1 |
| Beispiel | | 80,5 | 57,5 | 20 | 20 | |
| 1* | keine, nicht erfindungsgemäß | 91,5 | 55,5 | 33,5 | 22,5 | 2,58 |
| 2 | H₃PO₄(3 Gew.-%) | 86 | 64 | 30 | 24 | 2.94 |
| 3 | ZnCl₂(2,8 Gew.-%) | 86,5 | 65 | 28 | 24.5 | 3,28 |
| 4 | ZnSO₄(3,3 Gew.-%) | 85 | 59 | 27,5 | 24 | 2,91 |
| 5* | Gemisch von Cu- und Zn-Salzen (9,0 Gew.-% CuCO₃, bas. sowie 3,3 Gew.-% ZnCO₃, bas.) nicht erfindungsgemäß | 74 | 88 | 29,5 | 26,5 | 3,76 |
| 6 | Gemisch von Cu- und Zn-Salzen (40%-iger Imprägniergrad von Beispiel 5) | 82 | 73 | 30,5 | 23,5 | 2,94 |

| | | | | | | |
|---|---|---|---|---|---|---|
| * nicht erfindungsgemäß | | | | | | |

## Patentansprüche

1. Adsorbentienkombination für Filter kombinierter Brand- und IndustrieFluchtfiltergeräte geeignet für eine Adsorption von Cyclohexan, Chlor, Ammoniak, H₂S, HCN und SO₂ mit einer ABEK-Leistung nach DIN 58647-7 und EN 14387 und geeignet für eine Adsorption von CO mit einer CO-Leistung nach EN 403 aufweisend eine Schicht imprägnierter Aktivkohle und eine Schicht eines Oxidgemisches enthaltend größer 40 Gew.-% Mangan(IV)dioxid (MnO₂) und größer 20 Gew.-% Kupfer(II)oxid (CuO), bezogen auf das eingesetzte Oxidgemisch, **dadurch gekennzeichnet, dass**
- die imprägnierte Aktivkohle eine Imprägnierung umfasst, die ausgewählt ist aus einem oder mehreren Mitgliedern der Gruppe:
a) 1 bis 5 Gew.-% Phosphorsäure;
b1) zumindest einem Zinksalz einer anorganischen Säure, wobei die anorganische Säure eine Halogenwasserstoffsäure, Schwefelsäure oder Kohlensäure ist,
b2) zumindest einem Kupfersalz einer anorganischen Säure, wobei die anorganische Säure eine Halogenwasserstoffsäure, Schwefelsäure oder Kohlensäure ist, wobei
die Summe aus b1) und b2) 1 bis 12 Gew.-% beträgt,
- die Aktivkohle einen Wassergehalt von kleiner 4 Gew.-% aufweist, jeweils bezogen auf die Aktivkohle;
- die Aktivkohleschicht in Strömungsrichtung vor der Schicht des Oxidgemisches angeordnet ist.

2. Adsorbentienkombination gemäß Anspruch 1, wobei die Imprägnierung der Aktivkohle aus 2 bis 4 Gew.-% Phosphorsäure besteht.

3. Adsorbentienkombination gemäß Anspruch 1, wobei die Imprägnierung der Aktivkohle aus 1 bis 10 Gew.-% ZnCl₂ besteht, vorzugsweise 2 bis 5 Gew.-%.

4. Adsorbentienkombination gemäß Anspruch 1, wobei die Imprägnierung der Aktivkohle aus 1,5 bis 12 Gew.-% ZnSO₄ besteht, vorzugsweise 3 bis 6 Gew.-%.

5. Adsorbentienkombination gemäß Anspruch 1, wobei die Imprägnierung der Aktivkohle aus 1 bis 10 Gew.-% CuCl₂ besteht, vorzugsweise 2 bis 5 Gew.-%.

6. Adsorbentienkombination gemäß Anspruch 1, wobei die Imprägnierung der Aktivkohle aus 1,5 bis 12 Gew.-% CuSO₄ besteht, vorzugsweise 3 bis 6 Gew.-%.

7. Adsorbentienkombination gemäß Anspruch 1, wobei die Imprägnierung der Aktivkohle besteht aus:
zumindest einem Zinksalz einer anorganischen Säure, wobei die anorganische Säure eine Halogenwasserstoffsäure, Schwefelsäure oder Kohlensäure ist, und
zumindest einem Kupfersalz einer anorganischen Säure, wobei die anorganische Säure eine Halogenwasserstoffsäure, Schwefelsäure oder Kohlensäure ist,
und die Summe der Zink- und Kupfersalze im Bereich von 1 bis 12 Gew.-%, vorzugsweise im Bereich von 2 bis 6 Gew.-% liegt.

8. Adsorbentienkombination gemäß zumindest einem der Ansprüche 1 bis 7, wobei die Aktivkohle einen Wassergehalt von kleiner 2 Gew.-% aufweist.

9. Adsorbentienkombination gemäß zumindest einem der Ansprüche 1 bis 8, wobei das Oxidgemisch zumindest folgende Oxide enthält 65 +/- 10 Gew.-% MnO₂ und 35 +/- 10 Gew.-% CuO; vorzugsweise 65 +/- 5 Gew.% MnO₂ und 35 +/- 5 Gew.-% CuO und der Wassergehalt bei kleiner 3 Gew.-%, vorzugsweise bei < 1,5 Gew.-% liegt.

10. Adsorbentienkombination gemäß zumindest einem der Ansprüche 1 bis 9, wobei die Menge an imprägnierter Aktivkohle zwischen 80 und 140 ml beträgt, vorzugsweise zwischen 100 und 120 ml, und die Menge des Oxidgemischs zwischen 120 und 200 ml beträgt, vorzugsweise zwischen 150 und 170 ml.

11. Adsorbentienkombination gemäß zumindest einem der Ansprüche 1 bis 10, wobei das Volumen an Oxidgemisch 150 bis 170 ml beträgt.

12. Adsorbentienkombination gemäß zumindest einem der Ansprüche 1 oder 8 bis 11, wobei die Summe aus b1) und b2) 2 bis 6 Gew.-% beträgt.

13. Atemschutzfilter enthaltend die Adsorbentienkombination gemäß zumindest einem der Ansprüche 1 bis 12.

14. Verwendung der Adsorbentienkombination gemäß zumindest einem der Ansprüche 1 bis 12 in einem kombinierten Brand- und Industrie-Fluchtfiltergerät.

15. Verwendung des Atemschutzfilters nach Anspruch 13 in einem kombinierten Brand- und Industrie-Fluchtfiltergerät.

## Claims

1. Adsorbents combination for filters of combined fire- and industrial filter escape devices suitable for adsorption of cyclohexane, chlorine, ammonia, H₂S, HCN, and SO₂ with an ABEK-power according to DIN 58647-7 and EN 14387 and suitable for an adsorption of CO with a CO-performance according to EN 403 comprising a layer of impregnated activated carbon and a layer of an oxide mixture containing more than 40 wt.-% of manganese (IV) dioxide (MnO₂) and more than 20 wt.-% copper (II) oxide (CuO), based on the applied oxide mixture, **characterized in that**
- the impregnated activated carbon comprises an impregnation selected from one or more members of the group:
a) 1 to 5 wt.-% phosphoric acid;
b1) at least one zinc salt of an inorganic acid, wherein the inorganic acid is a hydrogen halide acid, sulfuric acid or carbonic acid,
b2) at least one copper salt of an inorganic acid, wherein the inorganic acid is a hydrogen halide acid, sulfuric acid or carbonic acid, in which
the sum of b1) and b2) amounts to 1 to 12 wt.-%,
- the activated carbon has a water content of less than 4 wt.-%, each, based on the activated carbon;
- the layer of activated carbon is arranged in flow direction upstream the layer of the oxide mixture.

2. Adsorbents combination according to claim 1, wherein the impregnation of the activated carbon consists of 2 to 4 wt.-% phosphoric acid.

3. Adsorbents combination according to claim 1, wherein the impregnation of the activated carbon consists of 1 to 10 wt.-% ZnCl₂, preferably 2 to 5 wt.-%.

4. Adsorbents combination according to claim 1, wherein the impregnation of the activated carbon consists of 1.5 to 12 wt.-% ZnSO₄, preferably 3 to 6 wt.-%.

5. Adsorbents combination according to claim 1, wherein the impregnation of the activated carbon consists of 1 to 10 wt.-% CuCl₂, preferably 2 to 5 wt.-%.

6. Adsorbents combination according to claim 1, wherein the impregnation of the activated carbon consists of 1.5 to 12 wt.-% CuSO₄, preferably 3 to 6 wt.-%.

7. Adsorbents combination according to claim 1, wherein the impregnation of the activated carbon is composed of:
at least a zinc salt of an inorganic acid, wherein the inorganic acid is a hydrogen halide acid, sulfuric acid or carbonic acid, and
at least a copper salt of an inorganic acid, wherein the inorganic acid is a hydrogen halide acid, sulfuric acid or carbonic acid,
and the sum of the zinc and copper salts is in the range of 1 to 12 wt.-%, preferably in the range of 2 to 6 wt.-%.

8. Adsorbents combination according to at least one of claims 1 to 7, wherein the activated carbon is having a water content of less than 2 wt.-%.

9. Adsorbents combination according to at least one of claims 1 to 8, wherein the oxide mixture contains at least the following oxides 65 +/- 10 wt.-% MnO₂ and 35 +/- 10 wt.-% CuO; preferably 65 +/- 5 wt.% MnO₂ and 35 +/- 5 wt.-% CuO and the water content is less than 3 wt.-%, preferably < 1.5 wt.-%.

10. Adsorbents combination according to at least one of claims 1 to 9, wherein the amount of impregnated activated carbon is between 80 and 140 ml, preferably between 100 and 120 ml, and the amount of the oxide mixture is between 120 and 200 ml, preferably between 150 and 170 ml.

11. Adsorbents combination according to at least one of claims 1 to 10, wherein the volume of the oxide mixture is 150 to 170 ml.

12. Adsorbents combination according to at least one of claims 1 or 8 to 11, wherein the sum of b1) and b2) is 2 to 6 wt.-%.

13. Respirator filter containing the adsorbents combination according to at least one of claims 1 to 12.

14. Use of adsorbents combination according to at least one of claims 1 to 12 in a combined fire- and industrial filtering escape device.

15. Use of respiratory filter according to claim 13 in a combined fire- and industrial filtering escape device.

## Revendications

1. Combinaison d'adsorbants pour des filtres d'appareils filtrants de fuite incendie et industrie combinés, appropriée pour une adsorption de cyclohexane, de chlore, d'ammoniac, de H₂S, de HCN et de SO₂ avec une puissance ABEK selon DIN 58647-7 et EN 14387 et appropriée pour une adsorption de CO avec une puissance CO selon EN 403, présentant une couche de charbon actif imprégné et une couche d'un mélange d'oxydes contenant plus de 40 % en poids de dioxyde de manganèse (IV) (MnO₂) et plus de 20 % en poids d'oxyde de cuivre (II) (CuO), par rapport au mélange d'oxydes utilisé, **caractérisée par le fait que**
- le charbon actif imprégné comporte une imprégnation qui est choisie parmi un ou plusieurs des membres du groupe :
a) 1 à 5 % en poids d'acide phosphorique ;
b1) au moins un sel de zinc d'un acide inorganique, l'acide inorganique étant un acide halohydrique, l'acide sulfurique ou l'acide carbonique,
b2) au moins un sel de cuivre d'un acide inorganique, l'acide inorganique étant un acide halohydrique, l'acide sulfurique ou l'acide carbonique,
la somme de b1) et b2) s'élevant à 1 à 12 % en poids,
- le charbon actif présente une teneur en eau de moins de 4 % en poids, à chaque fois par rapport au charbon actif ;
- la couche de charbon actif est disposé dans le sens de l'écoulement avant la couche du mélange d'oxydes.

2. Combinaison d'adsorbants selon la revendication 1, suivant laquelle l'imprégnation du charbon actif se compose de 2 à 4 % en poids d'acide phosphorique.

3. Combinaison d'adsorbants selon la revendication 1, suivant laquelle l'imprégnation du charbon actif se compose de 1 à 10 % en poids de ZnCl₂, de préférence de 2 à 5 % en poids.

4. Combinaison d'adsorbants selon la revendication 1, suivant laquelle l'imprégnation du charbon actif se compose de 1,5 à 12 % en poids de ZnSO₄, de préférence de 3 à 6 % en poids.

5. Combinaison d'adsorbants selon la revendication 1, suivant laquelle l'imprégnation du charbon actif se compose de 1 à 10 % en poids de CuCl₂, de préférence de 2 à 5 % en poids.

6. Combinaison d'adsorbants selon la revendication 1, suivant laquelle l'imprégnation du charbon actif se compose de 1,5 à 12 % en poids de CuSO₄, de préférence de 3 à 6 % en poids.

7. Combinaison d'adsorbants selon la revendication 1, suivant laquelle l'imprégnation du charbon actif se compose de :
au moins un sel de zinc d'un acide inorganique, l'acide inorganique étant un acide halohydrique, l'acide sulfurique ou l'acide carbonique, et
au moins un sel de cuivre d'un acide inorganique, l'acide inorganique étant un acide halohydrique, l'acide sulfurique ou l'acide carbonique,
et la somme des sels de zinc et de cuivre se situe dans la plage de 1 à 12 % en poids, de préférence dans la plage de 2 à 6 % en poids.

8. Combinaison d'adsorbants selon au moins l'une des revendications 1 à 7, suivant laquelle le charbon actif présente une teneur en eau de moins de 2 % en poids.

9. Combinaison d'adsorbants selon au moins l'une des revendications 1 à 8, suivant laquelle le mélange d'oxydes contient au moins les oxydes suivants 65 +/- 10 % en poids de MnO₂ et 35 +/- 10 % en poids de CuO ; de préférence 65 +/- 5 % en poids de MnO₂ et 35 +/- 5 % en poids de CuO et la teneur en eau se situe à moins de 3 % en poids, de préférence à < 1,5 % en poids.

10. Combinaison d'adsorbants selon au moins l'une des revendications 1 à 9, suivant laquelle la quantité de charbon actif imprégné s'élève à une valeur entre 80 et 140 mL, de préférence entre 100 et 120 mL, et la quantité du mélange d'oxydes s'élève à une valeur entre 120 et 200 mL, de préférence entre 150 et 170 mL.

11. Combinaison d'adsorbants selon au moins l'une des revendications 1 à 10, suivant laquelle le volume de mélange d'oxydes s'élève à 150 à 170 mL.

12. Combinaison d'adsorbants selon au moins l'une des revendications 1 ou 8 à 11, suivant laquelle la somme de b1) et b2) s'élève à 2 à 6 % en poids.

13. Filtre de protection respiratoire contenant la combinaison d'adsorbants selon au moins l'une des revendications 1 à 12.

14. Utilisation de la combinaison d'adsorbants selon au moins l'une des revendications 1 à 12 dans un appareil filtrant de fuite incendie et industrie combiné.

15. Utilisation du filtre de protection respiratoire selon la revendication 13 dans un appareil filtrant de fuite incendie et industrie combiné.
